# EUROPÄISCHE PATENTSCHRIFT

(11) **EP 3 500 447 B1**
(45) Veröffentlichungstag und Bekanntmachung des Hinweises auf die Patenterteilung: **19.08.2020**
(21) Anmeldenummer: 17768344.8
(22) Anmeldetag: 26.07.2017
(51) Int. Cl.: B60H 1/00, F25B 45/00, G01B 3/50

(54) **VORRICHTUNG ZUR PRÜFUNG VON BEFÜLLADAPTERN FÜR KÄLTEMITTEL**
DEVICE FOR TESTING FILLING ADAPTERS FOR REFRIGERANT
DISPOSITIF DE CONTRÔLE D'ADAPTATEURS DE REMPLISSAGE POUR RÉFRIGÉRANT

(30) Priorität: 16.08.2016 DE 102016010169
(43) Veröffentlichungstag der Anmeldung: 26.06.2019
(73) Patentinhaber: Dürr Somac GmbH, 09366 Stollberg (DE)
(72) Erfinder: DIETEL, Dany, 09569 Oederan (DE)
(74) Vertreter: Findeisen, Andreas
(86) Internationale Anmeldenummer: PCT/DE2017/000232
(87) Internationale Veröffentlichungsnummer: WO 2018/033166

(56) Entgegenhaltungen:
- WO-A1-2016/015706
- CH-A1- 703 905
- US-A- 5 010 743

## Beschreibung

Die Erfindung betrifft eine Vorrichtung zur Prüfung von Schnittstellen zwischen einem Befülladapter und einer Kraftfahrzeug-Klimaanlage, wobei der Befülladapter für eine Befüllung mit mindestens einem Kältemittel (R134a; R1234yf) ausgestaltet ist.

Für eine Befüllung von Behältern, Kreisläufen und ähnlichen Komponenten von Fahrzeugen mit Kraft-, Schmier-, Kühl- und anderen Betriebsstoffen sind bereits zahlreiche Vorrichtungen bekannt. So beschreiben z.B. EP 1 271 073 A2, EP 1 996 851 B1 und US 7 404 414 B2 technische Lösungen zur Befüllung von Klimaanlagen für Kraftfahrzeuge.

Diesbezügliche Klimaanlagen weisen an ihrer Niederdruckseite und ihrer Hochdruckseite jeweils anschlussartige Schnittstellen auf, die im Rahmen der vorliegenden Beschreibung nachfolgend als "Fahrzeugnippel" bezeichnet werden. Über diese Fahrzeugnippel werden die Klimaanlagen druckgetestet, evakuiert und befüllt. Weiterhin werden die Fahrzeugnippel für spätere Wartungen an der Klimaanlage verwendet. Diese Fahrzeugnippel sind an der Hochdruck- und Niederdruckseite mit jeweils unterschiedlichen geometrischen Konturen ausgestaltet. Somit werden bei einer Handhabung durch einen Werker Verwechslungen zwischen der Hochdruckseite und der Niederdruckseite vermieden. Gleichzeitig wird dadurch gewährleistet, dass nur das konkret zulässige Kältemittel in die Klimaanlage befüllt wird. Die Geometrien der verschiedenen Fahrzeugnippel sind in der internationalen SAE-Norm J639 festgelegt.

Während in der Automobilindustrie für Klimaanlagen zunächst ganz überwiegend nur das Kältemittel R134a verwendet worden ist, wird seit einiger Zeit zunehmend ein weiteres Mittel verwendet. Durch die Einführung dieses neuen Kältemittels R1234yf ist es notwendig geworden, neue Fahrzeugnippel an den Klimaanlagen auszugestalten. Weiterhin werden für diese Fahrzeugnippel zwangsläufig auch modifizierte Befülladapter benötigt.

Sofern jetzt an der Montagelinie bei einem Fahrzeughersteller unterschiedliche Klimaanlagen verbaut werden, die auch mit unterschiedlichen Kältemitteln (z.B. mit R134a oder R1234yf) befüllt werden müssen, erfordert dies den Einsatz von insgesamt vier separaten Adaptern an der zugehörigen Befüllanlage. Dieser Aufwand lässt sich vorteilhaft vermindern, sofern ein sog. Twin-Adapter gemäß DE 10 2014 011 611 A1 eingesetzt wird. Diese Vorrichtung ist in der Lage, beide unterschiedlichen Fahrzeugnippelkonturen zu erkennen und auf beiden Konturen zu spannen und somit systemabhängig mit dem richtigen Kältemittel zu befüllen. Demzufolge wird mit lediglich jeweils einem Adapter für Hochdruck und für Niederdruck eine Befüllung mit zwei unterschiedlichen Kältemitteln realisiert.

Allerdings besteht aktuell das Problem, dass für Adapter zur Befüllung mit Kältemittel keine geeigneten Prüfmittel und Prüfverfahren verfügbar sind, die eine Verifikation des sicheren Spannens auf einem SAE-konformen Fahrzeugnippel ermöglichen. Eine Nachweisführung einer SAE-konformen Adaption ist somit nicht möglich. Ebenso ist die Einstellung/Kalibrierung der Befülladapter derzeit nur durch ein iteratives Einstellen und Testen am Originalteil möglich.

Aufgabe der Erfindung ist es, eine gerätetechnische Lösung zur Prüfung von Adaptern für die Befüllung von Kraftfahrzeug-Klimaanlagen zu schaffen, wobei auch Anforderungen von verschiedenen Kältemitteln zu berücksichtigen sind.

Zur Lösung dieser Aufgabe wird eine Vorrichtung vorgeschlagen, die einen Grundkörper mit zwei hexagonförmigen Seitenflächen aufweist, die mit Abstand zueinander angeordnet und über eine umlaufende, rechtwinklig zu den Seitenflächen ausgerichtete rechteckförmige Kontur miteinander verbunden sind. In jedem Konturabschnitt ist jeweils ein Fahrzeugnippel zur Prüfung der Hochdruckseite angebracht. Drei dieser insgesamt sechs Fahrzeugnippel sind für jeweils ein Kältemittel ausgeführt, wobei von den drei Fahrzeugnippeln für jeweils ein Kältemittelt jeweils ein erstes Fahrzeugnippel die untere Toleranzgrenze darstellt, ein zweites Fahrzeugnippel die obere Toleranzgrenze darstellt sowie ein drittes Fahrzeugnippel zum Einstellen der Wegmesssysteme der Nippelerkennung am Befülladapter ausgestaltet ist. Vorteilhafte Ausgestaltungen sind Gegenstand von Unteransprüchen, deren technische Merkmale in einem Ausführungsbeispiel näher erläutert werden.

Mit der erfindungsgemäßen technischen Lösung wird ein gut zu handhabendes Prüfmittel für Befülladapter verfügbar, das eine Verifikation des Spannens auf Fahrzeugnippel sowie eine exakte Kalibrierung des Adapters ermöglicht. Somit wird nunmehr ein Nachweis möglich, ob die jeweiligen Befülladapter eine SAE-konforme Adaption gewährleisten. Weiterhin existiert somit ein technisches Hilfsmittel, welches das Kalibrieren des Wegmesssystems der Befülladapter effizienter gestaltet.

Diese Vorrichtung ist für eine Prüfung von Adaptern geeignet, mit denen lediglich ein Kältemittel (R134a oder R1234yf) befüllt werden kann. Ebenso ist diese Vorrichtung jedoch auch zur Prüfung von Twin-Adaptern geeignet, mit denen alternativ zwei verschiedene Kältemittel (R134a und R1234yf) befüllt werden können. Die Vorrichtung kann sowohl firmenintern für spezifische Untersuchungen genutzt als auch als Zubehör für Befülladapter angeboten werden.

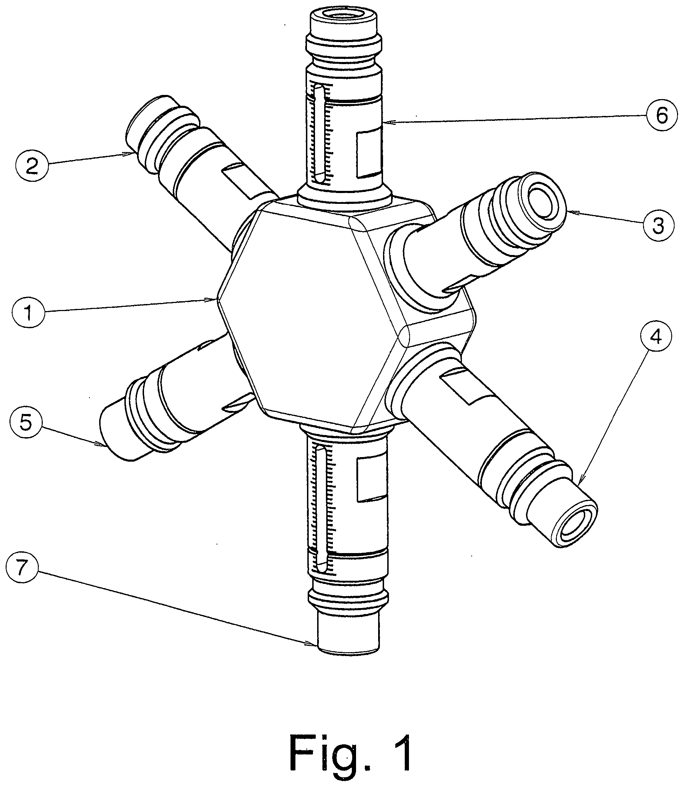

Nachfolgend wird ein Ausführungsbeispiel der Erfindung erläutert:
Die in der Zeichnung dargestellte Vorrichtung ist zur Prüfung von Schnittstellen zwischen einem Befülladapter für Kältemittel und einer Kraftfahrzeug-Klimaanlage konzipiert, wobei diese Baugruppen in der Zeichnung nicht näher dargestellt sind.

Die Vorrichtung weist einen Grundkörper mit zwei hexagonförmigen Seitenflächen auf. Diese Seitenflächen sind mit Abstand zueinander angeordnet und über eine umlaufende, jeweils rechtwinklig zu den Seitenflächen ausgerichtete rechteckförmige Kontur miteinander verbunden. In jedem dieser Konturabschnitte ist jeweils ein Fahrzeugnippel zur Prüfung der Hochdruckseite angebracht. Diese insgesamt sechs Fahrzeugnippel entsprechen bezüglich ihrer Kontur, Maße und Toleranzen der SAE-Norm J639. Drei von diesen insgesamt sechs Fahrzeugnippeln sind für jeweils ein Kältemittel ausgeführt. Dabei stellt jeweils ein Fahrzeugnippel jeder Gruppe die untere Toleranzgrenze und die obere Toleranzgrenze dar. Ein weiterer Fahrzeugnippel jeder Gruppe ist zum Einstellen der Wegmesssysteme der Nippelerkennung am Befülladapter ausgestaltet und funktionell somit als ein "Teach-Nippel" ausgeführt. Die insgesamt zwei "Teach-Nippel" weisen an ihrer Umfangskontur jeweils eine Schlitzung mit einer eingravierten Skala auf. Mit dieser Skala kann unter Verwendung eines originalen Klimaventils des Fahrzeugherstellers die korrekte Öffnung nach Betätigung der Klimakupplung überprüft werden.

Die oben beschriebenen technischen Merkmale sind auch aus der Zeichnung ersichtlich, die nachfolgend erläutert wird. Demzufolge sind an den sechs umlaufenden Konturabschnitten (Bezugszeichen "1") zwischen den zwei hexagonförmigen Seitenflächen des Grundkörpers folgende Fahrzeugnippel zur Prüfung der Hochdruckseite angebracht:
2 Prüf-Fahrzeugnippel R134a als Fahrzeugnippel für die obere Toleranzlage (HD+) des Kältemittels R134a an Hochdruckseite
3 Prüf-Fahrzeugnippel R134a als Fahrzeugnippel für die untere Toleranzlage (HD-) des Kältemittels R134a an Hochdruckseite
4 Prüf-Fahrzeugnippel R 1234yf als Fahrzeugnippel für die obere Toleranzlage (HD+) des Kältemittels R1234yf an Hochdruckseite
5 Prüf-Fahrzeugnippel R 1234yf als Fahrzeugnippel für die untere Toleranzlage (HD-) des Kältemittels R1234yf an Hochdruckseite
6 Prüf- (Teach-) Fahrzeugnippel R134a als Einstell-Fahrzeugnippel für die mittlere Toleranzlage (HD Teach) des Kältemittels R134a an Hochdruckseite
7 Prüf- (Teach-) Fahrzeugnippel R1234yf als Einstell-Fahrzeugnippel für die mittlere Toleranzlage (HD Teach) des Kältemittels R1234yf an Hochdruckseite

Sofern die Vorrichtung mit den sechs oben beschriebenen Fahrzeugnippeln 2 bis 7 für eine Überprüfung einer SAE-konformen Adaption an beispielsweise einem Twin-Adapter für die Kältemittel R134a und R1234yf eingesetzt wird, ist folgender Prüfablauf möglich:
a) Adaption des Befülladapters auf dem (Teach-) Fahrzeugnippel R134a
b) Einstellung des Wegmesssystems für die Position R134a
c) Adaption des Befülladapters auf dem (Teach-) Fahrzeugnippel R1234yf
d) Einstellung des Wegmesssystems für die Position R1234yf
e) Kontrolle am (Prüf-) Fahrzeugnippel untere Toleranzgrenze (HD-) R134a
f) Kontrolle am (Prüf-) Fahrzeugnippel obere Toleranzgrenze (HD+) R134a
g) Kontrolle am (Prüf-) Fahrzeugnippel untere Toleranzgrenze (HD-) R1234yf
h) Kontrolle am (Prüf-) Fahrzeugnippel obere Toleranzgrenze (HD+) R1234yf

Dabei können die Kontrollschritte e) bis h) im Falle einer fehlerhaften Adaption am Fahrzeug genutzt werden, um festzustellen, ob dieses Problem fahrzeugspezifisch ist oder ursächlich durch den Befülladapter verursacht wird.

## Patentansprüche

1. Vorrichtung zur Prüfung von Schnittstellen zwischen einem Befülladapter und einer Kraftfahrzeug-Klimaanlage, wobei der Befülladapter für eine Befüllung mit mindestens einem Kältemittel (R134a; R1234yf) ausgestaltet ist, **dadurch gekennzeichnet, dass** die Vorrichtung einen Grundkörper mit zwei hexagonförmigen Seitenflächen aufweist, die mit Abstand zueinander angeordnet und über eine umlaufende, jeweils rechtwinklig zu den Seitenflächen ausgerichtete rechteckförmige Kontur miteinander verbunden sind, wobei in jedem Konturabschnitt (1) jeweils ein Fahrzeugnippel (2,3,4,5,6,7) zur Prüfung der Hochdruckseite der Befülladapter angebracht ist, wobei drei dieser insgesamt sechs Fahrzeugnippel für jeweils ein Kältemittel ausgeführt sind und wobei von den drei Fahrzeugnippeln für jeweils ein Kältemittelt jeweils ein erstes Fahrzeugnippel (3,5) die untere Toleranzgrenze und ein zweites Fahrzeugnippel (2,4) die obere Toleranzgrenze darstellt sowie ein drittes Fahrzeugnippel (6,7) zum Einstellen der Wegmesssysteme der Nippelerkennung am Befülladapter ausgestaltet ist.

2. Vorrichtung nach Anspruch 1, **dadurch gekennzeichnet, dass** die zwei Fahrzeugnippel (6,7) zum Einstellen der Wegmesssysteme an ihrer Umfangskontur eine Schlitzung mit einer eingravierten Skala aufweisen, mit der unter Verwendung eines originalen Klimaventils des Fahrzeugherstellers die korrekte Öffnung nach Betätigung der Klimakupplung überprüfbar ist.

3. Vorrichtung nach Anspruch 1, **dadurch gekennzeichnet, dass** die insgesamt sechs Fahrzeugnippel (2,3,4,5,6,7) bezüglich ihrer Kontur, Maße und Toleranzen der SAE-Norm J639 entsprechen.

## Claims

1. A device for testing interfaces between a filling adapter and a motor vehicle air conditioning system, wherein the filling adapter is configured for filling with at least one refrigerant (R134a; R1234yf), **characterized in that** the device has a base body with two hexagonal side surfaces which are interconnected by means of a circumferential rectangular contour which is aligned at a right angle to each of the side surfaces, wherein one vehicle nipple (2, 3, 4, 5, 6, 7) is attached to each contour section (1) for testing the high-pressure , side of the filling adapters, wherein three of the overall six vehicle nipples is configured for one refrigerant and wherein out of the three vehicle nipples for one refrigerant, a first vehicle nipple (3, 5) represents the lower tolerance limit and a second vehicle nipple (2, 4) represents the upper tolerance limit, and a third vehicle nipple (6, 7) is configured for setting the path measuring systems of the nipple detection system on the filling adapter.

2. The device according to claim 1, **characterized in that** the two vehicle nipples (6, 7) for setting the path measuring systems have a slitting with an engraved scale on their circumferential contour, by means of which the correct opening after operating the air conditioning clutch can be verified using the original air conditioning valve of the vehicle manufacturer.

3. The device according to claim 1, **characterized in that** the overall six vehicle nipples (2, 3, 4, 5, 6, 7) are in conformity with SAE standard J639 with respect to their contour, dimensions, and tolerances.

## Revendications

1. Dispositif de contrôle d'interfaces entre un adaptateur de remplissage et un système de climatisation de véhicule automobile, l'adaptateur de remplissage étant conçu pour être rempli avec au moins un réfrigérant (R134a ; R1234yf), **caractérisé en ce que** le dispositif présente un corps de base avec deux surfaces latérales hexagonales disposées à distance l'une de l'autre et reliées l'une à l'autre par un contour rectangulaire périphérique orienté perpendiculairement aux surfaces latérales, un raccord pour véhicule (2, 3, 4, 5, 6, 7) étant monté dans chaque section du contour (1) respectivement pour contrôler le côté haute pression de l'adaptateur de remplissage, trois de ces six raccords pour véhicules au total sont exécutés chacun pour un réfrigérant ; parmi ces trois raccords dédiés à un réfrigérant, un premier raccord pour véhicule (3, 5) représente la limite de tolérance inférieure, un deuxième raccord pour véhicule (2, 4) représente la limite de tolérance supérieure, le troisième raccord pour véhicule (6, 7) étant conçu pour le réglage des systèmes de mesure de course de la détection de raccord sur l'adaptateur de remplissage.

2. Dispositif selon la revendication 1, **caractérisé en ce que** les deux raccords pour véhicule (6, 7) pour le réglage des systèmes de mesure de course présentent sur leur contour périphérique une rainure avec une échelle gravée, à l'aide de laquelle, en utilisant une soupape de climatisation d'origine du constructeur du véhicule, l'ouverture correcte peut être contrôlée après l'actionnement du couplage de climatisation.

3. Dispositif selon la revendication 1, **caractérisé en ce que** les six raccords pour véhicule (2, 3, 4, 5, 6, 7) au total sont conformes à la norme SAE J639 en ce qui concerne leurs contours, leurs dimensions et leurs tolérances.
